Europäisches Patentamt

European Patent Office

Office européen des brevets

(19)

(11) EP 0 773 064 A1

(12) EUROPEAN PATENT APPLICATION

(43) Date of publication:
14.05.1997 Bulletin 1997/20

(51) Int Cl.⁶: **B01J 31/18**

(21) Application number: 96660075.1

(22) Date of filing: 25.10.1996

(84) Designated Contracting States:
**AT BE DE FR GB IT NL SE**

(30) Priority: 09.11.1995 FI 955397

(71) Applicant: **NESTE OY**
**FIN-02150 Espoo (FI)**

(72) Inventors:
- **Haukka, Matti**
  **55100 Imatra (FI)**
- **Venäläinen, Tapani,**
  **80260 Joensuu (FI)**
- **Pakkanen, Tapani**
  **80100 Joensuu (FI)**

(74) Representative:
**Miettinen, Teuvo Seppo Aukusti et al**
**FORSSEN & SALOMAA OY,**
**Yrjönkatu 30**
**00100 Helsinki (FI)**

(54) **A process for preparing water gas shift reaction catalysts and the use of such a catalyst**

(57)     The invention relates to a process for improving the properties of catalysts used in water gas shift reactions. Supported ruthenium monobipyridines used as catalysts are activated with NaOH, whereby highly active catalysts performing at a low temperature are obtained. By NaOH activation it is also possible to improve the activities of known heterogenous ruthenium catalysts, especially at the lower end of the reaction temperature range.

## Description

The invention relates to a process for the preparation of water gas shift reaction catalysts, a catalyst prepared by the process, and the use of the catalyst for the preparation of hydrogen gas from water and carbon monoxide.

The water gas shift reaction (WGSR) is a process industrially used for the preparation of hydrogen, wherein a mixture of carbon monoxide and water vapor is converted into hydrogen and carbon dioxide in accordance with Equation 1.

$$(1) \qquad CO + H_2O \rightarrow H_2 + CO_2$$

Typical industrially used WGSR catalysts are transition metal oxides, such as iron and chromium oxides, or mixtures of copper, zinc and aluminum oxides. The last-mentioned of these catalysts are so-called low-temperature catalysts, but even they require temperatures of at minimum 200 °C in order to perform. The problem with high reaction temperatures is that the raising of the temperature shifts the reaction equilibrium towards the initial materials, thus decreasing the conversion through the reaction. Therefore attempts have been made to seek catalysts by using which a sufficient reaction velocity could be achieved even at low temperatures.

Typical WGSR catalysts working at low temperatures (100-200 °C) include organo-metal compounds and complexes of transition metals such as ruthenium; these are usually homogenous catalysts. Known heterogenous supported ruthenium catalysts are considerably fewer. One of the most active systems is $Ru_3(CO_{12}/2,2'$-bipyridine/$SiO_2$ (cf. US 4699 775). The preparation process has a strong effect on the activity of an $Ru_3(CO)_{12}/2,2'$-bipyridine/$SiO_2$ catalyst. The best results have been achieved by using catalysts prepared by the CVD (Chemical Vapor Deposition) technique. In the said process the catalyst precursors $Ru_3(CO)_{12}$ and 2,2'-bipyridine are deposited onto a support by successive controlled sublimations (cf. FI84143).

It is known that alkali metal hydroxides improve the activity of homogenous ruthenium compounds in a water gas shift reaction. Thus US patent 4226 845 states that homogenous catalysts which contain ruthenium carbonyl and iron carbonyl perform better in a water gas shift reaction if the reaction is carried out in alkaline conditions. In the process according to the patent, however, alkali metal hydroxides are used solely for producing alkaline reaction conditions.

The present invention discloses a process for the preparation of novel supported or unsupported ruthenium/bipyridine-based catalysts by using as the initial material ready-made ruthenium bipyridine compounds or a mixture of a ruthenium compound and a bipyridine. According to the process of the invention, a supported or unsupported ruthenium bipyridine compound, for example $[Ru(bpy)(CO)_2ClH]$, $[\{Ru(bpy)(CO)_2Cl\}_2]$, $[Ru(bpy)(CO)_2Cl(C(O)OCH_3)]$ or $[Ru(bpy)(CO)_2Cl_2]$, is activated by means of an alkali metal hydroxide, whereby a catalyst is formed.

Contrary to the process of US patent 4226 845, in the process of the present invention an alkali metal hydroxide is used as a catalyst activator. The ruthenium bipyridine compound used as the catalyst precursor is allowed to react with an alkali metal hydroxide, whereby an active catalyst is formed. In the water gas shift reaction itself, an alkali metal hydroxide is not necessary; the reaction can be carried out in neutral conditions by using only water and carbon monoxide as the initial materials. In the process according to the invention, the effect of the alkali metal hydroxide shows in two ways, in addition to the activation: 1) the color of the supported or unsupported ruthenium bipyridine turns dark blue and 2) a strong change occurs within the $\nu(CO)$ range in the IR spectrum of the formed catalyst (the IR spectra of alkali metal hydroxide activated catalysts are very similar regardless of the initial material). The said phenomena indicate that the treatment with an alkali metal hydroxide leads to the formation of a novel catalytically active compound.

Unactivated ruthenium bipyridines such as $[Ru(bpy)(CO)_2ClH]$, $[\{Ru(bpy)(CO)_2Cl\}_2]$, $[Ru(bpy)(CO)_2Cl(C(O)OCH_3)]$ and $[Ru(bpy)(CO)_2Cl_2]$ are by themselves either inactive or very weakly active in water gas transfer reactions. The low activity is mainly due to the fact that slight activation occurs already when the compounds are heated in a neutral aqueous solution. However, heating in water does not lead to significant improvement of activity. Also, mere thermal activation does not lead to the formation of a catalyst in the case of the said ruthenium bipyridine compounds.

The treatment of unsupported ruthenium bipyridines with an alkali metal hydroxide, disclosed in the invention, leads to the formation of an insoluble, catalytically active product. However, the activity can be increased considerably if supported (for example, $SiO_2$-supported) ruthenium bipyridines are used. This is due to the fact that a considerably larger active surface area is obtained with a catalyst dispersed on a support than when using an unsupported heterogenous catalyst. Alkali metal hydroxide activation can be used in conjunction with any dispersion method, for example, conventional impregnation or pulse impregnation.

The conditions to be used in alkali metal hydroxide activation depend on the ruthenium bipyridine precursor used as the initial material. For example, for compounds $[Ru(bpy)(CO)_2ClH]$ and $[Ru(bpy)(CO)_2Cl(C(O)OCH_3)]$ it suffices that the initial material or supported initial material is treated with an 0.001-0.5 mol/l, preferably 0.05-0.2 mol/l, NaOH solution at room temperature. Furthermore, deposited onto a support the said compounds can be activated directly in the pulse impregnation apparatus. In pulse impregnation the support material is packed into a heatable reactor tube or reactor column which can be evacuated and into which the required solutions can be fed airlessly in a shield gas. The coating of the support is carried out by feeding a precursor solution through a bed of support so that an even precursor coating is achieved in the entire bed. Thereafter an alkali metal hydroxide activation can be carried out by feeding an activation solution (e.g. 0.1 mol/l NaOH) through the support bed. After the activation it is also possible to carry out a water gas shift reaction directly in the pulse impregnation apparatus. This procedure has the advantage that the transfer of the catalyst, which is at least to some extent air-sensitive, to a separate water gas shift reactor can be avoided and the risk of air contact can be reduced.

As regards more stable ruthenium bipyridines, such as $[\{Ru(bpy)(CO)_2Cl\}_2]$ and in particular $[Ru(bpy)(CO)_2Cl_2]$, the treatment with an alkali metal hydroxide at room temperature is not sufficient but the catalyst must be activated by heating (e.g. by refluxing) the initial material or supported initial material in an alkali metal hydroxide solution. $[\{Ru(bpy)(CO)_2Cl\}_2]$ and $[Ru(bpy)(CO)_2Cl_2]$ also become partly activated even at room temperature, but for these compounds the completion of the activation reaction requires heating. Thus the treatment with an alkali metal hydroxide can be carried out at temperatures of 20-150 °C. The alkali metal hydroxide activation of more stable supported ruthenium bipyridine compounds is thus better applicable when combined with conventional impregnation.

The optimum temperature range for a water gas shift reaction in the case of alkali metal hydroxide activated ruthenium bipyridine compounds is 100-170 °C, depending on the initial material. The raising of the temperature above the optimum range no longer increases activity but may instead lead to the decomposition of the catalyst.

Regardless of whether the activation of a supported ruthenium bipyridine is carried out at room temperature or as a refluxing combined with impregnation or a pulse impregnation process, the treatment with an alkali metal hydroxide may cause some degree of detaching of the ruthenium compound from the support, as a finely divided solid product. This may be due to the initial material, poorly adhering to the support, reacting rapidly with the alkali metal hydroxide, thereby forming a finely divided unsupported catalyst, which becomes removed as a solid product in connection with the removal of the alkali metal solution and the washing of the catalyst. On the other hand, ruthenium-containing compounds are no longer detached from the activated and washed catalyst, for example, during the water gas shift reaction, and thus the final catalyst is stable.

Regardless of the ruthenium bipyridine initial material used, both supported and unsupported alkali metal hydroxide activated catalysts produce equivalent amounts of carbon dioxide and hydrogen, in accordance with Equation 1. Other gaseous products are not formed in the reaction.

The invention is described below with the help of examples.

## Example 1

Ruthenium bipyridine compounds were prepared according to a process described in the literature [Haukka, M. et al. Organometallics, 14 (1995) 825]. The catalyst was prepared by weighing 0.035-0.070 mmol of ruthenium bipyridine $[Ru(bpy)(CO)_2Cl_2]$, $[\{Ru(bpy)(CO)_2Cl\}_2]$ or $[Ru(bpy)(CO)_2Cl(C(O)OCH_3)]$ into a 100 ml flask. The flask was rinsed with a number of vacuum/nitrogen cycles to remove air. 3 ml of an 0.1 mol/l nitrogenated NaOH solution was added into the flask, and the solution was present until the end of the reaction. The flask was charged with a CO pressure of 500 mmHg, whereafter the flask was heated for 17 h at 100 °C, whereby a dark blue catalyst was formed.

## Example 2

A catalyst was prepared in a pulse impregnation/WGSR apparatus. The initial material used was $[Ru(bpy)(CO)_2Cl(C(O)OCH_3)]$. The reactor column was packed with 1.2-2.5 g of a $SiO_2$ support. The pretreatment of the support was carried out either directly in the reactor column by heating the support under vacuum at 100 °C for 17 h, or before the packing into the reactor column, in air at 600 °C for 24 h. In the latter case the support was cooled under vacuum and was transferred to the reactor column airlessly. The heating of the reactor was by oil circulation.

Solutions:

Reagent solution A: a dichloromethane, THF or dichloromethane/methanol solution having a ruthenium bipyridine concentration of 4 g/l. Before use the dried solvents were nitrogenated to remove oxygen. Activation solution B: a 0.05-0.10 mol/l aqueous solution of NaOH. Before use the solution was nitrogenated to remove oxygen.

Cycle for preparation of catalyst:

The entire preparation cycle was carried out in a nitrogen atmosphere, shielded from oxygen.

1) Reagent solution A was run through the column in sufficiently long solution pulses so that an even ruthenium bipyridine coating was obtained in the entire support bed.

2) The support bed was dried by evacuating the catalyst after each reagent pulse to remove the organic solvent.

3) Activation solution was run through the reactor column in sufficiently long pulses so that activation took place in the entire support bed. This was observed as the formation of a blue color.

4) The support bed was dried by evacuation.

To increase the concentration of catalyst to the desired value, steps 1-4 were repeated. After the preparation of the catalyst, the catalyst was either washed with water to remove the excess NaOH and any possible salts, or the catalyst was taken into use without a separate wash.

## Example 3

In another preparation process the catalyst was prepared by carrying out only an alkali hydroxide activation in a pulse impregnation/WGSR apparatus. 140-345 mg of [Ru(bpy)(CO)$_2$ClH], or [Ru(bpy)(CO)$_2$Cl(C(O)OCH$_3$)] was dispersed onto a pretreated SiO$_2$ support (100 °C, 17 h, vacuum) by conventional impregnation out of organic solvents (THF or dichloromethane). The impregnated catalyst was dried under vacuum to remove the organic solvent and was transferred airlessly to the pulse impregnation/WGSR apparatus. Activation was carried out by running through the support bed an excess of an 0.1 mol/l NaOH solution in one or more pulses.

## Example 4

An Ru$_3$(CO)$_{12}$/2,2'-bipyridine/SiO$_2$ catalyst was prepared by impregnating pretreated (2.5 g, 600 °C, 24 h) silica with 84 mg of [Ru$_3$(CO)$_{12}$] and 63 mg of 2,2'-bipyridine out of dicholoromethane in nitrogen shield gas by using an oxygen-free dry dichloromethane as the solvent. After the impregnation the organic solvent was removed and the catalyst was transferred airlessly to an ampoule, in which the catalyst was activated thermally (100 °C, 17 h). After the thermal activation the catalyst was transferred airlessly to a pulse impregnation/WGSR apparatus, in which an alkali metal hydroxide activation was carried out by running an excess of an 0.1 mol/l NaOH solution through the support bed in one or more pulses.

## Example 5

A catalyst was prepared in nitrogen shield gas in a 100 ml flask by impregnating a pretreated (600 °C, 24 h or 100 °C, 17 h, vacuum) SiO$_2$ support with a ruthenium bipyridine compound out of an organic solvent (dichloromethane or THF). The poorly soluble [{Ru(bpy)(CO)$_2$Cl}$_2$] was "impregnated" by mixing the compound with SiO$_2$ in THF.

After the impregnation, all of the catalysts were dried under vacuum to remove the organic solvent. The calculated concentration of ruthenium on the support after the impregnation was 2-2.5 % by weight. Catalysts [Ru(bpy)(CO)$_2$ClH] /SiO$_2$ and [Ru(bpy)(CO)$_2$Cl(C(O)OCH$_3$)]/SiO$_2$ were activated by adding to the impregnated support an excess (30-50 ml) of an 0.1 mol/l NaOH solution. The activation period was 2-5 h. [Ru(bpy)(CO)$_2$Cl$_2$]/SiO$_2$ and [{Ru(bpy)(CO)$_2$Cl}$_2$]/ SiO$_2$, which are more stable, were activated by refluxing the catalyst in an 0.1 mol/l NaOH or KOH solution for 2-17 h. After the activation, all of the catalysts were washed with water to remove the excess NaOH and any salts possibly formed (e.g. NaCl). Finally the catalysts were dried under vacuum.

Irrespective of the initial material, the activation produced a dark blue catalyst. After the activation, the concentrations of Ru in the catalysts ranged from 1.4 to 2.3 %. In connection with the activation and the water wash of the catalyst, some of the ruthenium compound, as a finely-divided solid, detached from the support. A typical calculated Ru concentration before activation was 2 % by weight, and after the activation/washing step it was approx. 1.5 % by weight. After the initial detaching, the Ru concentration became constant. After the activation the Ru concentration was determined by dissolving the catalyst in an HF/HCL/H$_2$SO$_4$ solution and by analyzing the Ru concentration by using an atom absorption spectrometer.

## Example 6

The water gas shift reaction which occurred in connection with the preparation of an unsupported catalyst according to Example 1 was determined by analyzing the gas atmosphere in the activation vessel by gas chromatography. The results are shown in Table 1 **(A)**.

## Example 7

The catalyst formed in the activation in Example 1 was reused in a water gas shift reaction by evacuating the reaction vessel and by charging it with a CO pressure of 275 mmHg. The results are shown in Table 1 **(B)**.

Table 1.

| | Catalyst amount (mmol) | Charging pressure $P_{CO}$ (mmHg) | CO conversion % | Charging pressure $P_{CO}$ (mmHg) | CO conversion % |
|---|---|---|---|---|---|
| Activity of unsupported, alkali metal hydroxide activated ruthenium bipyridines in a water gas shift reaction. | | | | | |
| Catalyst precursor | | A | A | B | B |
| $[Ru(bpy)(CO)_2Cl_2]$ | 0.070 | 508 | 18 | 274 | 14 |
| $[\{Ru(bpy)(CO)_2Cl\}_2]$ | 0.036 | 495 | 57 | 276 | 95 |
| $[Ru(bpy)(CO)_2Cl(C(O)OCH_3)\}$ | 0.071 | 505 | 31 | 271 | 67 |

A: Water gas shift reaction which took place in connection with the activation of the catalyst (Example 1). Reaction time 17 h. B: Activity of the activated catalysts. Reaction time 10 h, reaction temperature 100 °C.

## Example 8

A catalyst prepared according to Examples 2-4 was used for a water gas shift reaction directly in a pulse impregnation/WGSR apparatus (Figure 1). The total amount of catalyst in the reactor tube was 2.5 g. A mixture of carbon monoxide and water vapor was fed into the apparatus at a temperature of 110-113 °C, the reaction times ranging from one and a half to four days.

The reaction products were directed into a cold trap, in which the excess water was condensed. Thereafter the gaseous reaction products were analyzed by gas chromatography. The activity results are shown in Table 2.

Table 2.

| Catalyst precursor | Ru wt. % | Activation | t.o.f.[a] |
|---|---|---|---|
| Activities of activated and unactivated ruthenium bipyridines at a low temperature. | | | |
| $[Ru(bpy)(CO)_2ClH]/SiO_2$ | 1.5 | - | 3 |
| $[Ru(bpy)(CO)_2Cl(C(O)OCH_3)]/SiO_2$ | | | 16 |
| $Ru_3(CO)_{12}/2,2'$-bipyridine/$SiO_2$ | 1.5 | thermal | 2 |
| $[Ru(bpy)(CO)_2ClH]/SiO_2$ | 1.1 | NaOH | 240 |
| $[Ru(bpy)(CO)_2Cl(C(O)OCH_3)]/SiO_2$ | 1.0 | NaOh | 270 |
| $Ru_3(CO)_{12}/2,2'$-bipyridine/$SiO_2$ | 1.0 | terminal + NaOH | 93 |

The catalysis reactions were carried out in a pulse impregnation/WGSR reactor. Reaction conditions: T = 110-113 °C, flow rate 5-30 $cm^3$/min, $p_{CO}$ = 1.1 bar, $p_{H2O}$ = 1.3-1.5 bar. [a]t.o.f. = mol $CO_2$ (or $H_2$)/mol Ru/24 h. Continuous monitoring of the activity during the reaction was implemented by monitoring the formation of carbon dioxide.

## Examples 9-10

The activities of catalysts prepared according to Example 5 were determined by using a continuous-working reactor. The length of the stainless-steel reactor tube was 20 cm and its inner diameter 4 mm. The total catalyst amount in the reactor tube was 1.4-1.5 g. The feeding pressures of carbon monoxide and water varied according to the temperature and flow rate used, from 1 to 12 bar. The flow rate was regulated by maintaining the CO target conversion at 20 %. However, at lower temperatures the conversion was lower and, respectively, at higher temperatures it was higher, up to 90-95 %. The total duration of the water gas reactions ranged from 1 to 5 days. The maximum activities of the catalysts are shown in Table 3. The activities of the catalysts as a function of temperature are shown in Tables 4 and 5.

**Table 3**. Maximum activities of $SiO_2$-supported, alkali metal hydroxide activated ruthenium bipyridines in a water gas shift reaction.

| Catalyst precursor | Ru wt. % | T °C | t.o.f.[a] |
|---|---|---|---|
| [Ru(bpy)(CO)$_2$Cl$_2$]/SiO$_2$ | 1.5 | 150 | 4000 |
| [Ru(bpy)(CO)$_2$ClH]/SiO$_2$ | 1.3 | 150 | 6800 |
| [Ru(bpy)(CO)$_2$ClH]/SiO$_2$ | 1.3 | 160 | 10500 |
| [Ru(bpy)(CO)$_2$Cl(C(O)OCH$_3$)]/SiO$_2$ | 2.3 | 150 | 4100 |
| [Ru(bpy)(CO)$_2$Cl(C(O)OCH$_3$)]/SiO$_2$ | 2.3 | 160 | 6600 |
| [{Ru(bpy)(CO)$_2$Cl}$_2$]/SiO$_2$ | 1.6 | 150 | 14500 |
| [{Ru(bpy)(CO)$_2$Cl}$_2$]/SiO$_2$* | 1.7 | 150 | 7500 |

Reaction conditions: $p_{CO}$ = 5—15 bar, $p_{H2O}$ = 4.8—6.2 bar, flow rate 5—170 cm$^3$/min. [a]t.o.f. = mol $CO_2$ (or $H_2$)/mol Ru/24 h. Continuous monitoring of the activity during the reaction was implemented by monitoring the formation of carbon dioxide.

* Activation by using an 0.1 mol/l KOH solution, the other catalysts were activated using an 0.1 mol/l NaOH solution.

Table 4.

| Activities of alkali metal hydroxide (NaOH) activated [Ru(bpy)(CO)$_2$ClH]/SiO$_2$ and [Ru(bpy)(CO)$_2$Cl(C(O)OCH$_3$)]/ SiO$_2$ as a function of temperature. t.o.f. = mol $CO_2$ (or $H_2$)/mol Ru/24 h. | | | |
|---|---|---|---|
| [Ru(bpy)(CO)$_2$ClH] | | [Ru(bpy)(CO)$_2$Cl(C(O)OCH$_3$)] | |
| °C | t.o.f.* | °C | t.o.f.* |
| 100 | 217 | 100 | 290 |
| 120 | 1090 | 110 | 560 |
| 140 | 4080 | 115 | 700 |
| 150 | 6800 | 120 | 1000 |
| 160 | 10500 | 130 | 1650 |
| | | 140 | 2500 |
| | | 150 | 4100 |
| | | 155 | 4700 |
| | | 160 | 6600 |
| | | 170 | 10000** |

t.o.f.* = mol $CO_2$ (or $H_2$)/mol Ru/24 h.
** Catalyst unstable.

6

Table 5.

| Activities of alkali metal hydroxide (NaOH) activated [{Ru(bpy)(CO)$_2$Cl}$_2$]/SiO$_2$ and [Ru(bpy)(CO)$_2$-Cl$_2$]/SiO$_2$ as a function of temperature. t.o.f. = mol CO$_2$ (or H$_2$)/mol Ru/24 h. | | | |
|---|---|---|---|
| [Ru(bpy)(CO)$_2$ClH] | | [{Ru(bpy)(CO)$_2$Cl}$_2$] | |
| °C | t.o.f.* | °C | t.o.f.* |
| 100 | 230 | 100 | 830 |
| 110 | 480 | 110 | 2120 |
| 120 | 1000 | 120 | 3800 |
| 130 | 1760 | 130 | 6175 |
| 140 | 3400 | 140 | 10500 |
| 150 | 4000 | 150 | 14500 |

t.o.f.* = mol CO$_2$ (or H$_2$)/mol Ru/24h.

## Claims

1. A process for the preparation of a catalyst for the water gas shift reaction from ruthenium bipyridine compounds or from a ruthenium compound/2,2'-bipyridine mixture, **characterized** in that the catalyst is subjected to an activation treatment with an alkali metal hydroxide solution before being used for catalyzing a water gas shift reaction.

2. A process according to Claim 1, **characterized** in that the activation is carried out by treating the catalyst with an 0.001-0.5 M alkali metal solution, preferably with an 0.05-0.2 M alkali metal solution.

3. A process according to Claim 1 or 2, **characterized** in that the activation of the catalyst is carried out at a temperature of 20-150 °C.

4. A process according to any of the above claims, **characterized** in that the catalyst is prepared by using as the catalyst precursor a ruthenium bipyridine compound such as [Ru(bpy)(CO)$_2$ClH], [{Ru(bpy)(CO)$_2$Cl}$_2$], [Ru(bpy)(CO)$_2$Cl(C(O)OCH$_3$)] or [Ru(bpy)(CO)$_2$Cl$_2$].

5. A process according to any of the above claims, **characterized** in that the catalyst is prepared by using as the catalyst precursor a mixture of a ruthenium compound such as [Ru$_3$(CO)$_{12}$] and a bipyridine.

6. A process according to any of the above claims, **characterized** in that the ruthenium bipyridine compound or the mixture of a ruthenium compound and a bipyridine is deposited onto the support by impregnation, by pulse impregnation, by a CVD method or any corresponding dispersing method.

7. A process according to any of the above claims, **characterized** in that the catalyst is supported on an inorganic support, such as silica.

8. A catalyst for the water gas shift reaction, **characterized** in that it has been prepared by a method according to Claims 1-5.

9. A water gas shift reaction wherein ruthenium bipyridine compounds or a mixture of a ruthenium compound and 2,2'-bipyridine is used as a catalyst, **characterized** in that it is carried out in neutral conditions by using as the catalyst an alkali metal hydroxide activated catalyst.

European Patent Office

**EUROPEAN SEARCH REPORT**

Application Number

EP 96 66 0075

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-5 041 685 (ALVILA LEILA ET AL) 20 August 1991 | | B01J31/18 |
| D,A | US-A-4 699 775 (VENAELAEINEN TAPANI ET AL) 13 October 1987 | | |
| D,A | US-A-4 226 845 (LAINE RICHARD M) 7 October 1980 | | |
| A | EP-A-0 438 761 (NESTE OY) 31 July 1991 | | |

TECHNICAL FIELDS SEARCHED (Int.Cl.6)

B01J

The present search report has been drawn up for all claims

| Place of search | Date of completion of the search | Examiner |
|---|---|---|
| THE HAGUE | 28 January 1997 | Faria, C |

EPO FORM 1503 03.82 (P04C01)